# EUROPÄISCHE PATENTSCHRIFT

(11) **EP 2 745 755 B1**
(45) Veröffentlichungstag und Bekanntmachung des Hinweises auf die Patenterteilung: **31.07.2019**
(21) Anmeldenummer: 13005983.5
(22) Anmeldetag: 20.12.2013
(51) Int. Cl.: A47J 37/06

(54) **Grillblech**
Grill pan
Plateau de gril

(30) Priorität: 21.12.2012 DE 202012012270 U; 21.12.2012 DE 102012025135
(43) Veröffentlichungstag der Anmeldung: 25.06.2014
(73) Patentinhaber: ACS Coating Systems GmbH, 26386 Wilhelmshaven (DE)
(72) Erfinder: Stecher, Christoph, 28386 Wilhelmshaven (DE)
(74) Vertreter: Philipp, Matthias

(56) Entgegenhaltungen:
- DE-A1- 4 206 453
- DE-C1- 19 529 005
- US-A- 3 369 481
- US-A- 5 105 725

## Beschreibung

Die Erfindung betrifft ein Grillblech aus Metall mit einer Vielzahl von benachbart zueinander angeordneten, im Querschnitt dachförmigen Grillabschnitten, wobei mindestens ein Grillabschnitt zwei in einer Längsrichtung verlaufende Seitenwände, die umgekehrt U- oder V-förmig zueinander angeordnet sind, und eine von den Seitenwänden gebildete, in Längsrichtung des Grillabschnitts verlaufende Auflagefläche für Grillgut aufweist.

Es sind aus Stahl gestanzte und gebogene Grillschalen bekannt, bei denen eine Anzahl benachbarter Grillabschnitte vorgesehen sind, zwischen denen sich beim Garen austretende Flüssigkeit, insbesondere Fett, sammelt, so dass diese nicht ins offene Feuer bzw. in die Glut gelangen kann, wobei gesundheitsschädliche Stoffe erzeugt werden.

Bei einer Anwendung in Backöfen bis ca. 300°C haben die bekannten Grillschalen den Nachteil, dass sie keine sichtbaren Grillstrukturen auf dem Grillgut hinterlassen.

Durch entsprechend dicke, massehaltige Grillroste oder Grillplatten, beispielsweise aus Aluminiumguss, können zwar derartige sichtbare Grillstrukturen erzielt werden, wobei jedoch der Nachteil besteht, dass derartige Grillroste relativ schwer und deren Produktion energieintensiv und teuer ist.

Ein Grillblech gemäß dem Oberbegriff des unabhängigen Anspruchs 1 ist aus US-A-5105725 bekannt.

Die Aufgabe der Erfindung besteht darin, ein gattungsgemäßes Grillblech dahingehend zu verbessern, dass auch bei Einsatz des Grillblechs in einem Backofen bei Temperaturen bis ca. 300°C ein Grillmuster auf dem Grillgut erzeugt wird. Weiterhin soll sich das Grillblech nach Möglichkeit im Gebrauch nicht verziehen.

Diese Aufgabe wird erfindungsgemäß durch ein Grillblech aus Metall gemäß dem unabhängigen Anspruch 1 gelöst.

Versuche haben gezeigt, dass der gewünschte Effekt der Bildung eines Grillmusters auf dem Grillgut dann auftritt, wenn ein bestimmtes Verhältnis zwischen der Breite der Auflagefläche und der Blechdicke besteht. Es ist günstig, wenn beide in der gleichen Größenordnung liegen, also wenn beispielsweise die Auflagefläche eine Breite von 2 mm aufweist und die Blechdicke der Seitenwände ebenfalls etwa 2 mm beträgt. Bei einer Überschreitung dieses Verhältnisses um mehr als 100% entsteht praktisch kein wahrnehmbares Grillmuster mehr, es sei denn, dass die Gartemperatur oder die Garzeit erhöht wird, was sich dann aber ungünstig auf die Effizienz bzw. den gewünschten Garzustand auswirkt. Bei einer Unterschreitung des Verhältnisses unter 25% besteht die Gefahr, dass das Gargut im Bereich des Grillmusters überhitzt wird und verbrennt bzw. anbrennt.

Wenn die Blechdicke beider Seitenwände gleich ist, entspricht die mittlere Blechdicke dieser Blechdicke, während im Falle insgesamt oder örtlich unterschiedlich dicker Seitenwände, was unter Umständen in speziellen Ausführungsformen möglich ist, die mittlere Blechdicke einem gemittelten Dickenmaß beider Seitenwände entspricht.

Die Erfindung sieht bevorzugt vor, dass die Auflagefläche eine Breite zwischen 50% und 150% und insbesondere zwischen 75% und 125% der mittleren Blechdicke aufweist.

Die Erfindung sieht vor, dass die Auflagefläche eben ist, wobei sie in der Erstreckungsebene des Grillblechs verläuft.

Es kann vorgesehen sein, dass die Grillabschnitte ausschließlich in einer Längsrichtung des Grillblechs oder in einer schrägen Richtung, insbesondere diagonal bezüglich einer rechteckigen Grundform des Grillblechs, verlaufen. Alternativ kann vorgesehen sein, dass die Grillabschnitte rasterförmig in einer Längsrichtung des Grillblechs und in einer Querrichtung verlaufen. Dabei kann bevorzugt vorgesehen sein, dass sämtliche Grillabschnitte im Querschnitt eine gleiche Größe aufweisen und auch einen gleichen gegenseitigen Abstand aufweisen, so dass in einer Draufsicht eine quadratische Rasteranordnung gebildet wird, wobei die Auflageflächen ein quadratisches Gitter bilden.

Zweckmäßigerweise ist vorgesehen, dass die Seitenwände eine Dicke zwischen 1 mm und 4 mm aufweisen, insbesondere ca. 2 mm.

Es ist günstig, wenn die Grillabschnitte eine Höhe, zwischen einer Oberseite und einer Unterseite des Grillblechs, von mindestens 5 mm aufweisen, wobei die Höhe insbesondere das 2 bis 5fache der Blechdicke der Seitenwände beträgt.

Zwischen benachbarten Grillabschnitten kann entweder ein geschlossener Aufnahmebereich zum Zurückhalten von Flüssigkeiten wie Fett oder aber ein schlitzförmiger, offener Abtropfbereich für den ungehinderten Durchtritt von Flüssigkeiten gebildet sein.

Jeder Grillabschnitt kann mit in den Seitenwänden angeordneten Löchern oder in Längsrichtung verlaufenden Schlitzen versehen sein, wobei es besonderes günstig ist, wenn die Löcher oder Schlitze in halber Höhe der Grillabschnitte angeordnet sind.

Das Grillblech kann an einer Oberseite und einer Unterseite mit Auflageflächen versehen sein, insbesondere mit Auflageflächen unterschiedlicher Breite, um unterschiedliche Grillmuster bei ansonsten gleichen Bedingungen erzielen zu können. Die Auflageflächen verlaufen in einer oberseitigen und einer unterseitigen Erstreckungsebene, wobei die Höhe des Grillblechs der Abstand der Erstreckungsebenen ist.

Zweckmäßigerweise sieht die Erfindung vor, dass das Grillblech mit einer Beschichtung versehen ist, wobei eine Oberseite eine erste Beschichtung und eine Unterseite eine zweite Beschichtung aufweisen kann, die gleich oder unterschiedlich sein können und keramische, etwa siliziumkeramische Beschichtungen, oder Polyaryletherketone wie PEK, PEKK, PEKEKK oder PEEK umfassen und eine Dicke zwischen 20 und 120 µm haben können. Die Beschichtung kann eine Füllung mit Metallen oder Metalloxyden aufweisen. Zugaben von Fluorpolymer können vorteilhaft sein. Ferner sind temperaturbeständige Duroplaste wie Silikonharz, Epoxidharz oder Polyimid bzw. Polyamidimid zweckmäßig, sofern die thermische Beständigkeit ausreichend ist. Temperaturbeständige Thermoplaste, z.B. Polyphenolensulfid oder Fluorpolymere wie PTFE, PFA etc. sind ebenso möglich.

Es kann zweckmäßig sein, wenn das Grillblech einen umlaufenden Rand aufweist, dessen Ober- oder Unterseite in einer Ebene mit den Auflageflächen von Ober- oder Unterseite verlaufen kann, oder der mittig bezüglich einer Höhe des Grillblechs angeordnet sein kann.

Das Grillblech kann vorteilhaft aus einem Metall mit guter Wärmeleitung gefertigt sein, etwa Aluminium oder Kupfer, wobei allerdings eine Herstellung aus Stahl ebenfalls möglich ist.

Erfindungsgemäß wird das Grillblech durch Prägen hergestellt.

Die Erfindung wird nachfolgend anhand von Ausführungsbeispielen beschrieben, wobei auf eine Zeichnung Bezug genommen wird, in der
Fig. 1 eine Draufsicht auf ein erfindungsgemäßes Grillblech zeigt,
Fig. 2 eine vergrößerte Darstellung eines Eckbereichs des Grillblechs nach Fig. 1 zeigt,
Fig. 3 eine Schnittansicht entlang Linie III - III in Fig. 1 zeigt,
Fig. 4 einen vergrößerten Teilbereich aus Fig. 3 zeigt, und
Fig. 5, 6 und 7 ausschnittsweise Schnittansichten, ähnlich Fig. 4, von Varianten der Ausführungsform nach Fig. 1 zeigen.

Das im Ganzen mit 2 bezeichnete Grillblech ist durch Prägen aus einem Aluminiumblech mit einer Ursprungsdicke von 2 mm hergestellt. Es weist eine Vielzahl von benachbart zueinander angeordneten, im Querschnitt dreieck- oder dachförmigen Grillabschnitten 4 auf, die jeweils von zwei umgekehrt V-förmig zueinander angeordneten , in einer Längsrichtung 5 verlaufenden Seitenwänden 6 gebildet sind. In einem Scheitelbereich eines jeden Grillabschnitts 4, wo die beiden zueinander geneigt angeordneten Seitenwände 6 aneinandergrenzen, ist eine Auflagefläche 8 für Grillgut gebildet, die parallel zur Längsrichtung 5 des jeweiligen Grillabschnitts 4 verläuft. Die Auflagefläche 8 verläuft eben und parallel zu einer oberseitigen Erstreckungsebene 10 des Grillblechs 2.

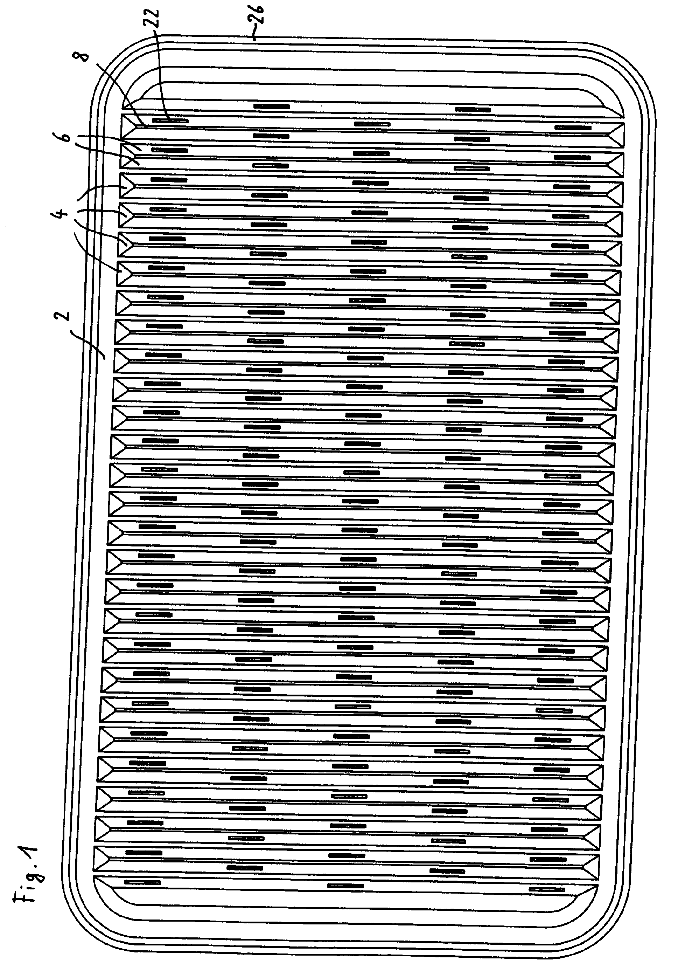

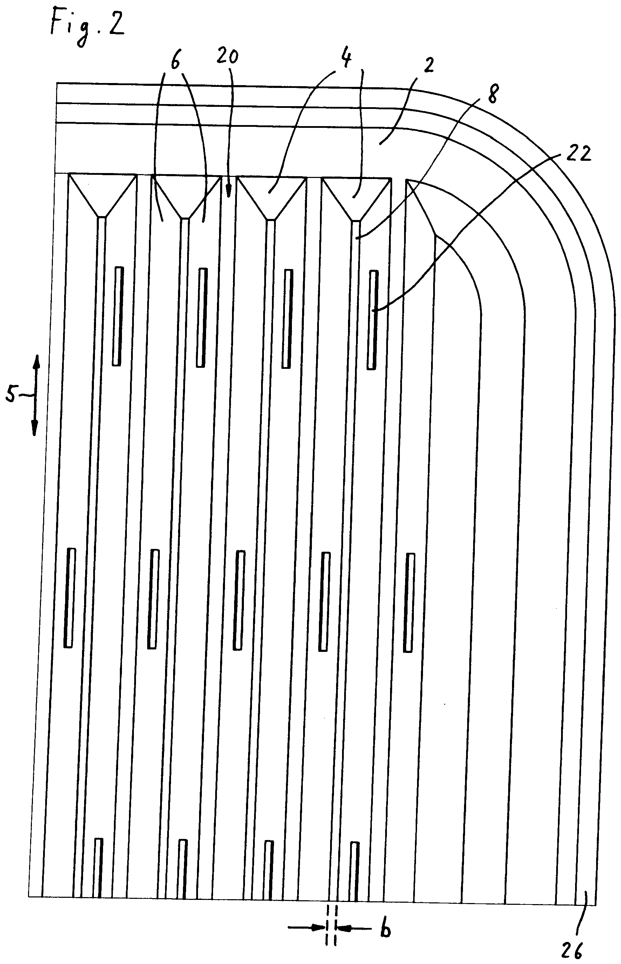

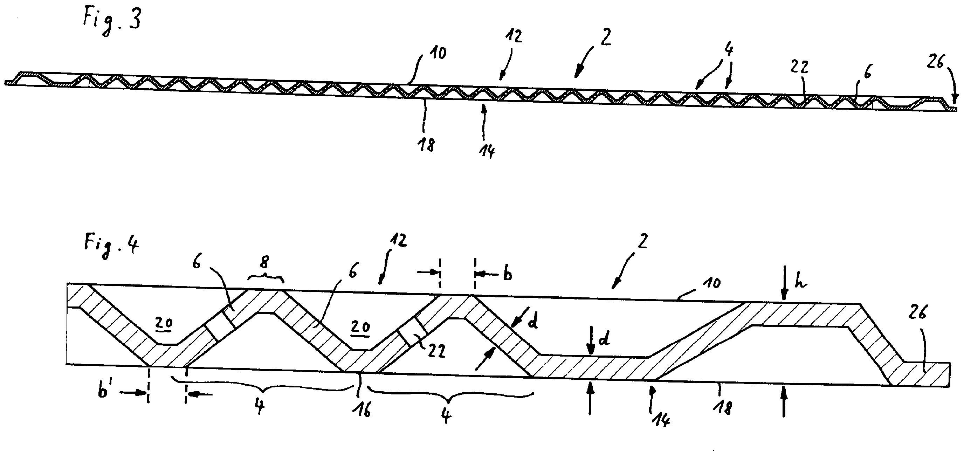

In der in Fig. 1 bis 4 dargestellten Ausführungsform ist die Auflagefläche 8 so bemessen, dass ihre Breite b, quer zur Längsrichtung des Grillabschnitts 4 gesehen, 3 mm und somit das 1,5 fache der Blechdicke d von 2 mm der Seitenwände 6 des Grillabschnitts 4 beträgt, wobei in dem dargestellten Ausführungsbeispiel beide Seitenwände 6 eine gleiche Blechdicke d aufweisen, die wiederum mit einer Ursprungsdicke von 2 mm des Grillblechs 2 übereinstimmt.

Wenn beide Seitenwände 6 eines Grillabschnitts 4 eine gleiche Blechdicke d haben, gilt erfindungsgemäß, dass eine Breite b der Auflagefläche 8 zwischen 25% und 200% der Blechdicke d liegt, insbesondere zwischen 75% und 125% der Blechdicke d, damit ein gewünschtes Grillmuster durch Wärmeeinwirkung in einem Stück Grillgut erzeugt werden kann.

In Fällen, in denen die Seitenwände 6 eines Grillabschnitts 4 unterschiedliche oder örtlich veränderliche Blechdicken aufweisen, gilt, dass die Auflagefläche 8 eine Breite besitzt, die zwischen 25% und 200% einer mittleren oder gemittelten Blechdicke der beiden Seitenwände des Grillabschnitts liegt, damit eine befriedigende Ausbildung eines Grillmusters möglich ist.

Der Grund hierfür liegt darin, dass es für die Ausbildung eines Grillmusters notwendig ist, eine relativ hohe Oberflächentemperatur in dem Grillgut zu erzeugen, was aufgrund der gleichzeitigen Wärmeableitung in das Grillgut nur gelingt, wenn eine hinreichende Wärmeleitung in die Auflagefläche 8 aus den dazu benachbarten Bereichen des Grillblechs, also den Seitenwänden, möglich ist. Dies wiederum setzt eine Mindestgröße des Verhältnisses der Querschnittsfläche der benachbarten Seitenwände 6 zur Größe der Auflagefläche 8 voraus.

Das Grillblech 2 nach Fig. 1 bis 4 ist nicht nur an einer Oberseite 12 mit Auflageflächen 8 für Grillgut versehen, sondern auch an einer Unterseite 14. An der Unterseite 14 sind in entsprechender Weise wie an der Oberseite 12 Auflageflächen 16 gebildet, die allerdings breiter mit einer Breite b' und somit größer sind als die Auflageflächen 8 an der Oberseite 12. Die unterschiedliche Ausbildung der beiderseitigen Auflageflächen 8, 16 hat den Sinn, durch Auswahl entweder der Oberseite 12 oder der Unterseite 14 als Grillfläche, auf die das zuzubereitende Grillgut aufgelegt wird, eine stärkere oder schwächere Ausbildung eines Grillmusters zu ermöglichen, oder gegebenenfalls auch unterschiedliche geometrische Grillmuster erzeugen zu können. Ähnlich wie an der Oberseite 12 sind die Auflageflächen 16 der Unterseite 14 eben und parallel zu einer unterseitigen Erstreckungsebene 18 ausgebildet. Zwischen den Auflageflächen 8, 16 bzw. zwischen den ober- und unterseitigen Erstreckungsebenen 10, 18 hat das Grillblech 2 eine Höhe h von 5 mm.

Zwischen jeweils zwei benachbarten Grillabschnitten 4 sind trogförmige Aufnahmebereiche 20 für austretende Flüssigkeiten gebildet, wobei zumindest jede zweite Seitenwand 6 mit Durchbrechungen 22 versehen ist, um überschüssige Flüssigkeit abzuleiten. Die Durchbrechungen 22 sind vorzugsweise in halber Höhe des Grillblechs angeordnet, etwa mittig zwischen der oberseitigen Erstreckungsebene 10 und der unterseitigen Erstreckungsebene 18, damit sie sich in beiden nutzbaren Orientierungen des Grillblechs (Oberseite 12 oben, Unterseite 14 oben) stets etwa in mittlerer Höhe der Aufnahmebereiche 20 befinden.

Insbesondere bei Verwendung von Aluminium als Werkstoff für das Grillblech ist zweckmäßigerweise eine geeignete Beschichtung vorzusehen, wobei die Wahl und Dicke der Beschichtung einen Einfluss auf die Entstehung und die Farbe von Grillmustern haben. Als günstig haben sich keramische Beschichtungen wie beispielsweise siliziumkeramische Beschichtungen herausgestellt. Ebenfalls günstig sind Beschichtungen aus Hochleistungspolymeren, beispielsweise der Klasse der Polyaryletherketone, möglicherweise auch PPS. Zusätzliche Füllungen mit Metallen oder Metalloxyden können günstig sein. Auch sind Zugaben von Fluorpolymeren möglich, allerdings möglicherweise nur in einer Schicht oder einzelnen Schichten eines aus mehreren Schichten bestehenden Beschichtungsaufbaus.

Weiterhin sind temperaturbeständige Duroplaste wie Silikonharz, Epoxidharz oder Polyimid bzw. Polyamidimid geeignet, soweit deren thermische Beständigkeit ausreicht.

Aufgrund der schlechteren Wärmeleitung von Beschichtungswerkstoffen im Vergleich zum metallischen Grundwerkstoff des Grillblechs wie Aluminium oder Kupfer geht die Ausbildung eines Grillmusters mit zunehmender Schichtdicke der Beschichtung zurück, was insbesondere ab ca. 100 µm Schichtdicke beobachtete wurde. Eine Schichtdicke von max. 100 µm, 80 µm, 60 µm, 40 µm oder von 20 µm liefert gute Ergebnisse.

Ober- und Unterseite können mit unterschiedlichen Materialien beschichtet sein, beispielsweise eine Seite für bessere Bräunungseigenschaften (z.B. für Fleisch) und die andere mit besseren Antihafteigenschaften (z.B. für Gemüse, Fisch oder helles Fleisch). Auch können beide Seiten unterschiedlich dick beschichtet sein.

In weiterer Ausgestaltung des Grillblechs ist ein Rand 26 vorgesehen, der entlang des äußeren Umfangs des Grillblechs verläuft und zweckmäßigerweise in Höhe einer oberseitigen oder unterseitigen Erstreckungsebene 10, 18 oder in Höhe der Auflageflächen 8, 18 des Grillblechs angeordnet ist. Dieser Rand 26 ermöglicht, dass das Grillblech zusammen mit einer Auffangwanne in einen Einschub geschoben werden kann.

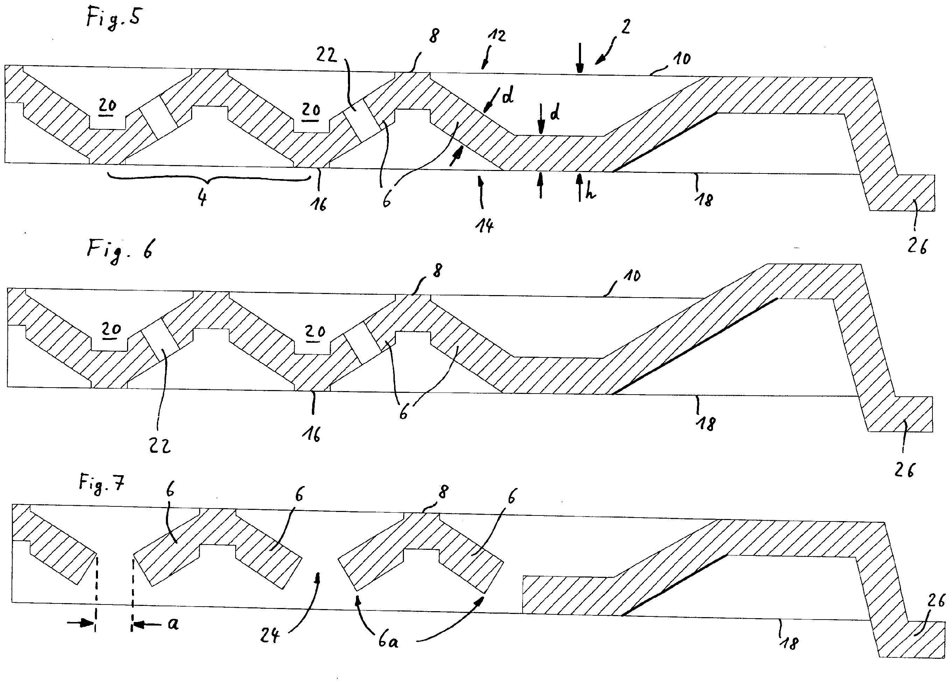

Fig. 5 und 6 zeigen zwei Varianten der Ausführungsform nach Fig. 1 bis 4, zunächst mit dem wesentlichen Unterschied, dass das Grillblech 2 in beiden Fällen eine markante Prägung aufweist, dort wo die Seitenwände 6 aneinandergrenzen bzw. ineinander übergehen und die Auflageflächen 8, 16 gebildet sind. Entweder kann das gesamte Grillblech als Ganzes in einem einzigen Prägevorgang hergestellt sein, oder aber die V-förmige Anordnung der Seitenwände 6 der einzelnen Grillabschnitte 4 kann durch Biegen gebildet sein, und anschließend können die Auflageflächen 8, 16 durch Prägen hergestellt sein.

Die ober- und unterseitigen Auflageflächen 8, 16 der Varianten nach Fig. 5 und 6 weisen jeweils eine gleiche Breite b auf, die in diesem Falle mit der Dicke d der Seitenwände 6 übereinstimmt, beispielsweise 2 oder 3 mm, so dass mit anderen Worten die Breite b der Auflageflächen 100% der mittleren Blechdicke der Seitenwände 6 beträgt. Auch die unverformte Ursprungsdicke des Grillblechs beträgt d.

Besonders günstig ist es, wenn das Grillblech stapelbar ausgebildet ist, wobei unterseitige Bereiche der Grillabschnitte eines Grillblechs in entsprechende oberseitige Bereiche zwischen benachbarten Grillabschnitten eines darunter angeordneten Grillblechs einsetzbar sind.

Fig. 7 zeigt eine Variante, bei der anstelle der Aufnahmebereiche 20 zwischen jeweils zwei benachbarten Grillabschnitten 4 Abtropfbereiche 24 gebildet sind, durch die während des Garvorgangs gebildete Flüssigkeit ungehindert nach unten ablaufen bzw. abtropfen kann. Die Abtropfbereiche 24 verlaufen in Längsrichtung ebenso wie die Grillabschnitte 4 und Auflagenflächen 8 und können unabhängig davon vorgesehen sein, ob die Grillabschnitte 4 lediglich in Längs- oder Diagonalrichtung verlaufen oder aber in zwei sich kreuzenden Richtungen, wie etwa in Längs- und Querrichtung. Die Abtropfbereiche 24 können sich über die gesamte Länge der Grillabschnitte 4 erstrecken, so dass die Seitenwände 6 lediglich an ihren äußersten Längsenden mit einem umlaufenden Rand des Grillblechs verbunden sind, welches dann nach Art eines Grillrosts ausgebildet ist, oder aber es können in Abständen Verbindungsbereiche zwischen benachbarten Grillabschnitten 4 vorgesehen sein, beispielsweise um die Stabilität zu erhöhen.

Fig. 7 zeigt weiterhin, dass die Seitenwände 6 an der Unterseite 14 des Grillblechs in einer Unterkante 6a auslaufen. Wenn eine Nutzung auch der Unterseite des Grillblechs als Grillauflage möglich sein soll, kann es zweckmäßig sein, anstelle der Unterkanten 6a Auflageflächen analog zu den Auflageflächen 16 der Varianten gemäß Fig. 5 und 6 vorzusehen.

### Bezugszeichenliste

- 2: Grillblech
- 4: Grillabschnitt
- 5: Längsrichtung
- 6: Seitenwand
- 6a: Unterkante (von 6)
- 8: Auflagefläche
- 10: oberseitige Erstreckungsebene
- 12: Oberseite
- 14: Unterseite
- 16: Auflagefläche
- 18: unterseitige Erstreckungsebene
- 20: Aufnahmebereich
- 22: Durchbrechung (Loch, Schlitz)
- 24: Abtropfbereich
- 26: Rand

- a: Breite (von 24)
- d: Blechdicke (von 6)
- b, b': Breite (von 8)
- h: Höhe (von 2)

## Patentansprüche

1. Grillblech (2) aus Metall mit einer Vielzahl von benachbart zueinander angeordneten, im Querschnitt dachförmigen Grillabschnitten (4), wobei mindestens ein Grillabschnitt (4) zwei in einer Längsrichtung (5) verlaufende Seitenwände (6), die umgekehrt U- oder V-förmig zueinander angeordnet sind, und eine von den Seitenwänden (6) gebildete, in Längsrichtung des Grillabschnitts (4) verlaufende Auflagefläche (8) für Grillgut aufweist, wobei die Auflagefläche (8) eben ist, parallel zu einer oberseitigen Erstreckungsebene (10) des Grillblechs (2) verläuft und eine Breite (b) hat, die zwischen 25% und 200% einer mittleren Blechdicke (d) der Seitenwände (6) des Grillabschnitts (4) liegt, **dadurch gekennzeichnet, dass** das Grillblech eine mit der mittleren Blechdicke (d) der Seitenwände (6) übereinstimmende Ursprungsdicke (d) aufweist und durch Prägen hergestellt ist.

2. Grillblech nach Anspruch 1, **dadurch gekennzeichnet, dass** die Auflagefläche eine Breite zwischen 50% und 150% und insbesondere zwischen 75% und 125% der mittleren Blechdicke (d) aufweist.

3. Grillblech nach einem der vorangehenden Ansprüche, **dadurch gekennzeichnet, dass** die Grillabschnitte (4) ausschließlich in Längsrichtung (5) des Grillblechs (2) oder in einer schrägen Richtung, insbesondere diagonal bezüglich einer rechteckigen Form des Grillblechs, verlaufen.

4. Grillblech nach einem der Ansprüche 1 oder 2, **dadurch gekennzeichnet, dass** die Grillabschnitte (4) rasterförmig in Längsrichtung (5) des Grillblechs (2) und in einer Querrichtung verlaufen.

5. Grillblech nach einem der vorangehenden Ansprüche, **dadurch gekennzeichnet, dass** die Seitenwände (6) eine Dicke (d) zwischen 1 mm und 4 mm aufweisen.

6. Grillblech nach einem der vorangehenden Ansprüche, **dadurch gekennzeichnet, dass** die Grillabschnitte zwischen einer Oberseite (12) und einer Unterseite (14) eine Höhe (h) von mindestens 5 mm aufweisen, wobei die Höhe (h) insbesondere das 2 bis 5fache der Blechdicke (d) der Seitenwände (6) beträgt.

7. Grillblech nach einem der vorangehenden Ansprüche, **dadurch gekennzeichnet, dass** zwischen benachbarten Grillabschnitten (4) ein geschlossener Aufnahmebereich (20) oder ein offener Abtropfbereich (24) gebildet ist.

8. Grillblech nach einem der vorangehenden Ansprüche, **dadurch gekennzeichnet, dass** jeder Grillabschnitt (4) mit in den Seitenwänden (6) angeordneten Durchbrechungen wie Löchern oder in Längsrichtung verlaufenden Schlitzen (22) versehen ist.

9. Grillblech nach Anspruch 8, **dadurch gekennzeichnet, dass** die Löcher oder Schlitze (22) in halber Höhe der Grillabschnitte (4) angeordnet sind.

10. Grillblech nach einem der vorangehenden Ansprüche, **dadurch gekennzeichnet, dass** das Grillblech (2) an einer Oberseite (12) und an einer Unterseite (14) mit Auflageflächen (8, 16) versehen ist, insbesondere mit Auflageflächen (8, 16) unterschiedlicher Breite (b, b').

11. Grillblech nach einem der vorangehenden Ansprüche, **dadurch gekennzeichnet, dass** das Grillblech mit einer Beschichtung versehen ist, wobei eine Oberseite (12) eine erste Beschichtung und eine Unterseite (14) eine zweite Beschichtung aufweisen kann, die gleich oder unterschiedlich sein können und insbesondere keramische, insbesondere siliziumkeramische, Beschichtungen oder Polyaryletherketon wie PEK, PEKK, PEKEKK oder PEEK umfassen können und eine Dicke zwischen 20 µm und 120 µm haben können.

12. Grillblech nach einem der vorangehenden Ansprüche, **gekennzeichnet durch** einen umlaufenden Rand (26), der parallel zu oder in einer Ebene mit den Auflageflächen (8, 16) von Ober- oder Unterseite (12, 14) verläuft.

13. Grillanordnung mit einem Grillblech nach einem der vorangehenden Ansprüche und einem Einschubrahmen mit einer Auffangwanne.

## Claims

1. Grill pan (2) made of metal with several cross-section roof-shaped grill portions (4) that are arranged adjacent to each other, wherein at least one grill portion (4) has two side walls (6) running along a longitudinal direction (5), which are arranged in reversed U or V-shape, and a support surface (8) for food to be grilled formed by the side walls (6), running in the longitudinal direction of the grill portion (4), the support surface (8) being level, running parallel to an upper extension plane (10) of the grill pan (2) and having a width (b), which lies between 25% and 200% of a middle sheet thickness (d) of the side walls (6) of the grill portion (4), **characterized in that** the grill pan has an original thickness (d) matching the middle sheet thickness (d) of the side walls (6) and is produced by stamping.

2. Grill pan according to claim 1, **characterized in that** the support surface has a width of between 50% and 150% and in particular between 75% and 125% of the middle sheet thickness (d).

3. Grill pan according to one of the above claims, **characterized in that** the grill portions (4) exclusively run in the longitudinal direction (5) of the grill pan (2) or in a diagonal direction, in particular diagonally in relation to a rectangular shape of the grill pan.

4. Grill pan according to one of claims 1 or 2, **characterized in that** the grill portions (4) run in a grid-type manner in the longitudinal direction (5) of the grill pan (2) and in a transverse direction.

5. Grill pan according to one of the above claims, **characterized in that** the side walls (6) have a thickness (d) of between 1 mm and 4 mm.

6. Grill pan according to one of the above claims, **characterized in that** the grill portions between a top (12) and a bottom (14) have a height (h) of at least 5 mm, wherein the height (h) in particular amounts to 2 - 5 times the sheet thickness (d) of the side walls (6).

7. Grill pan according to one of the above claims, **characterized in that** a closed retaining area (20) or an open drip area (24) is formed between adjacent grill portions (4).

8. Grill pan according to one of the above claims, **characterized in that** each grill portion (4) is provided with apertures arranged in the side walls (6) such as holes or slots (22) running in the longitudinal direction.

9. Grill pan according to claim 8, **characterized in that** the holes or slots (22) are located half-way down the grill portions (4).

10. Grill pan according to one of the above claims, **characterized in that** the grill pan (2) is provided on a top (12) and on a bottom (14) with support surfaces (8, 16), in particular support surfaces (8, 16) of varying width (b, b').

11. Grill pan according to one of the above claims, **characterized in that** the grill pan is provided with a coating, wherein a top (12) can have a first coating and a bottom (14) a second coating, which may be the same or different and comprise in particular ceramic, more particularly silicone-ceramic, coatings or polyaryletherketone such as PEK, PEKK, PEKEKK or PEEK and have a thickness of between 20 µm and 120 µm.

12. Grill pan according to one the above claims, **characterized by** a circulating edge (26), which runs parallel to or on a level with the support surfaces (8, 16) of the top or bottom (12, 14).

13. Grill arrangement with a grill pan according to one of the above claims and a rack with a drip tray.

## Revendications

1. Plateau de gril (2) réalisé en métal avec plusieurs parties de gril à coupe transversale en forme de toit (4) qui sont agencées de manière adjacente les unes par rapport aux autres, dans lequel au moins une partie de gril (4) a deux parois latérales (6) s'étendant le long d'une direction allant dans le sens longitudinal (5), qui sont agencées en une forme de U ou de V inversé, et une surface de support (8) pour les aliments destinés à être grillés formée par les parois latérales (6), s'étendant dans la direction allant dans le sens longitudinal de la partie de gril (4), la surface de support (8) étant de niveau, s'étendant de manière parallèle par rapport à un plan d'extension supérieur (10) du plateau de gril (2) et ayant une largeur (b), se trouvant entre 25 % et 200 % d'une épaisseur de feuille centrale (d) des parois latérales (6) de la partie de gril (4), **caractérisé en ce que** le plateau de gril a une épaisseur d'origine (d) correspondant à l'épaisseur de feuille centrale (d) des parois latérales (6) et est produit par estampage.

2. Plateau de gril selon la revendication 1, **caractérisé en ce que** la surface de support a une largeur se trouvant entre 50 % et 150 % et en particulier entre 75 % et 125 % de l'épaisseur de feuille centrale (d).

3. Plateau de gril selon l'une quelconque des revendications précédentes, **caractérisé en ce que** les parties de gril (4) s'étendent exclusivement dans la direction allant dans le sens longitudinal (5) du plateau de gril (2) ou dans une direction allant dans le sens de la diagonale, en particulier diagonalement par rapport à une forme rectangulaire du plateau de gril.

4. Plateau de gril selon l'une quelconque parmi la revendication 1 ou la revendication 2, **caractérisé en ce que** les parties de gril (4) s'étendent à la manière d'un type de grille dans la direction allant dans le sens longitudinal (5) du plateau de gril (2) et dans une direction allant dans le sens transversal.

5. Plateau de gril selon l'une quelconque des revendications précédentes, **caractérisé en ce que** les parois latérales (6) ont une épaisseur (d) se trouvant entre 1 mm et 4 mm.

6. Plateau de gril selon l'une quelconque des revendications précédentes, **caractérisé en ce que** les parties de gril entre une partie supérieure (12) et une partie inférieure (14) ont une hauteur (h) d'au moins 5 mm, dans lequel la hauteur (h) se monte en particulier à 2 à 5 fois l'épaisseur de feuille (d) des parois latérales (6).

7. Plateau de gril selon l'une quelconque des revendications précédentes, **caractérisé en ce qu'**une zone de retenue fermée (20) ou une zone d'égouttage ouverte (24) est formée entre des parties de gril adjacentes (4).

8. Plateau de gril selon l'une quelconque des revendications précédentes, **caractérisé en ce que** chaque partie de gril (4) comporte des ouvertures agencées dans les parois latérales (6) telles que des trous ou des fentes (22) s'étendant dans la direction allant dans le sens longitudinal.

9. Plateau de gril selon la revendication 8, **caractérisé en ce que** les trous ou les fentes (22) se trouvent à mi-chemin vers le bas le long des parties de gril (4).

10. Plateau de gril selon l'une quelconque des revendications précédentes, **caractérisé en ce que** le plateau de gril (2) comporte sur une partie supérieure (12) et sur une partie inférieure (14) des surfaces de support (8, 16), en particulier des surfaces de support (8, 16) de largeurs qui varient (b, b').

11. Plateau de gril selon l'une quelconque des revendications précédentes, **caractérisé en ce que** le plateau de gril comporte un revêtement, dans lequel une partie supérieure (12) peut avoir un premier revêtement et une partie inférieure (14) un deuxième revêtement, qui peuvent être les mêmes ou différents et qui comportent en particulier des revêtements en céramique, plus en particulier en silicone-céramique, ou en polyaryléthercétone tel que PEK, PEKK, PEKEKK ou PEEK et ont une épaisseur entre 20 µm et 120 µm.

12. Plateau de gril selon l'une des revendications précédentes, **caractérisé par** un bord de circulation (26), qui s'étend de manière parallèle ou de niveau par rapport aux surfaces de support (8, 16) de la partie supérieure ou de la partie inférieure (12, 14).

13. Agencement de gril avec plateau de gril selon l'une quelconque des revendications précédentes et une grille avec un plateau d'égouttage.
